# FASCICULE DE BREVET EUROPEEN

(11) **EP 2 422 416 B1**
(45) Date de publication et mention de la délivrance du brevet: **01.02.2017**
(21) Numéro de dépôt: 10717191.0
(22) Date de dépôt: 15.04.2010
(51) Int. Cl.: H02G 3/18, F16B 9/02, H02G 3/14

(54) **BOÎTE DE SOL REGLABLE EN HAUTEUR**
HÖHENEINSTELLBARE BODENDOSE
HEIGHT ADJUSTABLE FLOOR BOX

(30) Priorité: 24.04.2009 FR 0902003
(43) Date de publication de la demande: 29.02.2012
(73) Titulaire: Legrand France, 87000 Limoges (FR); Legrand SNC, 87000 Limoges (FR)
(72) Inventeur: COUTANT, Régis, 72140 Mont Saint Jean (FR); VAN DER WERF, Remco, Mattheus, Jacobus, 5632 JK Eindhoven (NL)
(74) Mandataire: Orsini, Fabienne
(86) Numéro de dépôt international: PCT/FR2010/000309
(87) Numéro de publication internationale: WO 2010/122238

(56) Documents cités:
- GB-A- 2 443 897
- US-A- 4 627 543

## Description

### DOMAINE TECHNIQUE AUQUEL SE RAPPORTE L'INVENTION

La présente invention concerne de manière générale le branchement d'appareils électriques au sol.

Elle concerne plus particulièrement une boîte de sol telle que définie dans le préambule de la revendication 1.

### ARRIÈRE-PLAN TECHNOLOGIQUE

Comme on le sait, les boîtes de sol sont généralement utilisées dans des bureaux de superficies importantes, dans lesquels les prises murales sont souvent trop éloignées pour être facilement accessibles. Chaque boîte de sol forme ainsi un îlot de branchement en un endroit donné du sol du bureau, permettant de raccorder des appareils électriques au réseau électrique, téléphonique ou internet.

Une telle boîte de sol doit être suffisamment résistante pour supporter le poids d'un individu marchant dessus. Elle doit par ailleurs être agencée de manière à ne faire que peu saillie au-dessus de la surface du sol, pour éviter qu'un individu ne bute dessus.

On connaît du document GB 2 443 897 une boîte de sol telle que précitée, dont le cadre d'installation présente un rebord périphérique adapté à prendre appui sur le sol, et dont les moyens de fixation permettent d'ajuster la hauteur du cadre d'installation par rapport à la base.

Ces moyens de fixation comportent en particulier quatre tiges cylindriques positionnées verticalement aux quatre coins de la plaque de la base, et quatre organes de verrouillage tubulaires qui sont situés aux quatre coins du cadre d'installation et qui sont adaptés à être engagés sur ces tiges.

Chaque tige présente deux séries de crans qui s'étendent sur toute sa hauteur, à l'opposé l'une de l'autre. Chaque organe de verrouillage présente en correspondance deux dents situées en regard. Ces organes de verrouillage sont montés mobiles en rotation sur le cadre d'installation, de manière que leurs dents puissent venir s'engager ou se dégager des crans des tiges de la plaque de base, à la manière de vis quart-de-tour.

Ainsi, pour rapporter le cadre d'installation sur la base, le cadre d'installation est tout d'abord positionné au-dessus de la plaque de la base de manière que ses organes de verrouillage tubulaires s'engagent sur les tiges cylindriques de la base. Le cadre d'installation est ensuite poussé vers la plaque jusqu'à ce que son rebord périphérique vienne en appui contre le sol. Lors de ce mouvement, les dents des organes de verrouillage naviguent à la manière de cliquets sur les crans des tiges de la plaque de base. Elles permettent ainsi de maintenir le cadre d'installation de telle sorte que celui-ci ne puisse pas être accidentellement extrait de la plaque de base.

L'inconvénient d'une telle boîte de sol est que ses organes de verrouillage ne permettent pas de bloquer l'enfoncement du cadre d'installation vers la plaque de base.

### OBJET DE L'INVENTION

Afin de remédier à cet inconvénient, la présente invention propose une boîte de sol dont chaque organe de verrouillage permet de bloquer le cadre d'installation en une position fixe par rapport à la plaque de base.

Plus particulièrement, on propose selon l'invention une boîte de sol telle que définie dans la revendication 1.

D'autres caractéristiques avantageuses et non limitatives de la boîte de sol conforme à l'invention sont définies dans les revendications 2 et suivantes.

### DESCRIPTION DÉTAILLÉE D'UN EXEMPLE DE RÉALISATION

La description qui va suivre, en regard des dessins annexés, donnée à titre d'exemple non limitatif, fera bien comprendre en quoi consiste l'invention et comment elle peut être réalisée.

Sur les dessins annexés :
- la figure 1 est une vue schématique éclatée d'un premier mode de réalisation d'une boîte de sol selon l'invention ;
- la figure 2 est une vue schématique assemblée de la base et du cadre d'installation de la boîte de sol de la figure 1 ;
- les figures 3 et 4 sont des vues de détail de l'organe de verrouillage de la boîte de sol de la figure 1, en position désengagée et en position engagée ;
- les figures 5 et 6 sont des vues de détail d'un second mode de réalisation de l'organe de verrouillage de la boîte de sol de la figure 1, en position désengagée et en position engagée ;
- les figures 7 et 8 sont des vues de détail d'un troisième mode de réalisation de l'organe de verrouillage de la boîte de sol de la figure 1, en position désengagée et en position engagée ; et
- la figure 9 est une vue schématique en perspective de dessous de l'organe de verrouillage de la figure 7.

En préliminaire, on notera que, d'une figure à l'autre, les éléments identiques ou similaires des différentes variantes de réalisation de l'invention seront, dans la mesure du possible, référencés par les mêmes signes de référence et ne seront pas décrits à chaque fois.

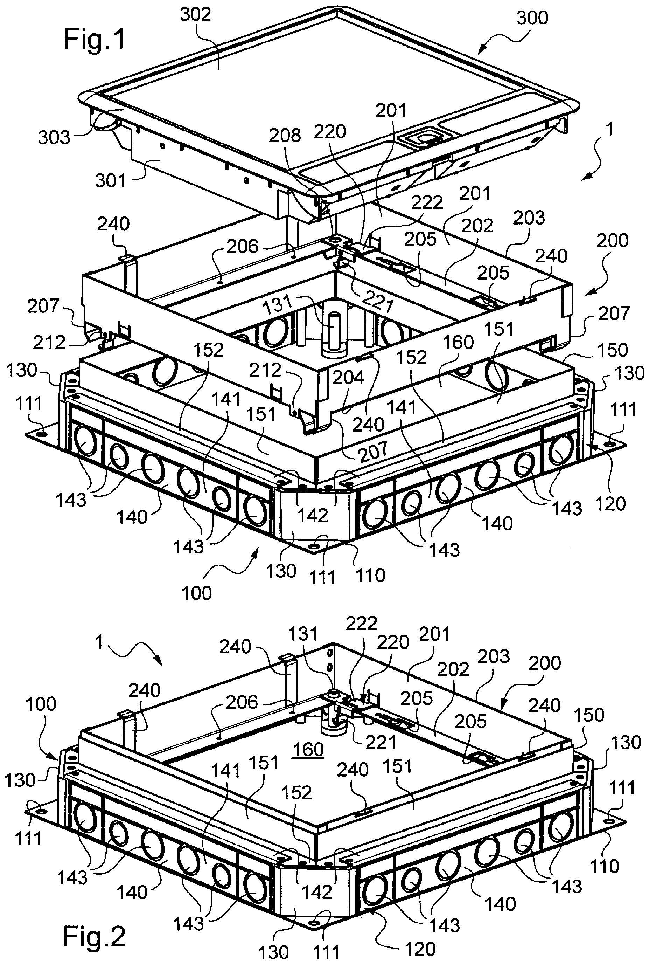

Sur les figures 1 à 4, on a représenté une boîte de sol 1 à fixer dans une excavation du sol, pour accueillir des appareillages électriques tels que des prises de courant, des prises de téléphone, des prises ethernet ou des interrupteurs.

Telle que représentée sur les figures 1 et 2, la boîte de sol 1 comporte une base 100 et un cadre d'installation 200 à rapporter sur cette base 100 par l'avant, à une hauteur réglable.

La base 100 comporte plus particulièrement une plaque de fond 110, ici carrée, à ancrer à l'horizontal sur le sol, et une enceinte latérale 120 qui borde cette plaque de fond 110 du côté de sa face avant tournée vers le cadre d'installation 200. Cette enceinte latérale 120 s'élève à partir de la plaque de fond 110, globalement perpendiculairement à celle-ci. Elle délimite avec la plaque de fond 110 un logement d'accueil 160 à l'intérieur de la boîte de sol 1.

La plaque de fond 110 comporte quatre ouvertures 111 respectivement situées à ses quatre coins, à l'extérieur du logement d'accueil 160, pour accueillir des vis de fixation de la base 100 sur le sol.

L'enceinte latérale 120 est plus particulièrement composée de quatre montants 130 s'étendant en biais aux quatre coins de la plaque de fond 110, de quatre pans droits 140 intercalés entre les quatre montants 130 en biais, et d'un cadre fixe 150 qui s'élève au-dessus des montants 130 et des pans droits 140.

Les montants 130 en biais sont fixés à la plaque de fond 110.

Le cadre fixe 150 présente une forme carrée et est situé à l'intérieur du périmètre délimité par les montants 130 en biais et les pans droits 140. Il comporte une paroi latérale 151 qui est formée de quatre plaques de faibles épaisseurs et qui est bordée à l'arrière (du côté de la plaque de fond 110) par un rebord extérieur 152 en équerre fixé sur les extrémités avant des montants 130.

Chaque pan droit 140 se présente sous la forme d'une plaque 141, avec un bord avant 142 replié à angle droit sur le rebord extérieur 152 en équerre du cadre fixe 150 pour s'y accrocher. Ces quatre pans droits 140 comprennent des opercules 143 sécables ou défonçables pour former des ouvertures de passage de gaines de câbles électriques depuis l'extérieur vers l'intérieur de la boîte de sol 1.

Le cadre d'installation 200 présente également une forme carrée. Il comporte une paroi latérale 201 qui est formée de quatre plaques de faibles épaisseurs et qui est bordée, le long de son bord arrière 204, par un rebord 202 qui s'étend à l'équerre vers l'intérieur de la boîte de sol 1. L'encombrement extérieur de la paroi latérale 201 est égal, au jeu près, aux dimensions de l'espace intérieur délimité par la paroi latérale 151 du cadre fixe 150 de la base 100, de telle manière que le cadre d'installation 200 peut coulisser verticalement dans le cadre fixe 150. La paroi latérale 201 du cadre d'installation 200 présente en outre, entre son bord avant 203 et son bord arrière 204, une hauteur supérieure à celle du cadre fixe 150, de telle sorte que le cadre d'installation 200 peut être réglé à différentes hauteurs par rapport au cadre fixe 150 tout en restant correctement maintenu par ce dernier.

Le cadre d'installation 200 est agencé pour supporter, d'une part, des supports d'appareillages électriques (non représentés), et, d'autre part, une plaque de façade 300 telle que celle représentée sur la figure 1.

Un telle plaque de façade 300 permet de recouvrir esthétiquement la base 100 et le cadre d'installation 200 de la boîte de sol 1. Elle comporte ici une ossature d'encadrement 301 bordée, du côté de sa face avant, par un rebord périphérique 303 prévu pour prendre appui sur la surface du sol. Elle comporte en outre un couvercle 302 monté à pivotement sur cette ossature d'encadrement 301 pour donner à l'utilisateur accès à l'intérieur de la boîte de sol 1.

Pour accueillir cette plaque de façade 300, le cadre d'installation 200 comporte deux paires d'ouvertures allongées 205 situées sur deux côtés opposés de son rebord 202 en équerre. Ces deux paires d'ouvertures allongées 205 permettent d'accueillir des clips de fixation agencés pour coopérer avec des moyens de clipage prévus en correspondance sur l'ossature d'encadrement 301 de la plaque de façade 300.

Pour accueillir les supports d'appareillages électriques, le cadre d'installation 200 comporte dans son rebord 202 une pluralité d'ouvertures circulaires 206 réparties le long de celui-ci, permettant d'accueillir des vis de fixation engagées au travers de ces supports d'appareillages électriques.

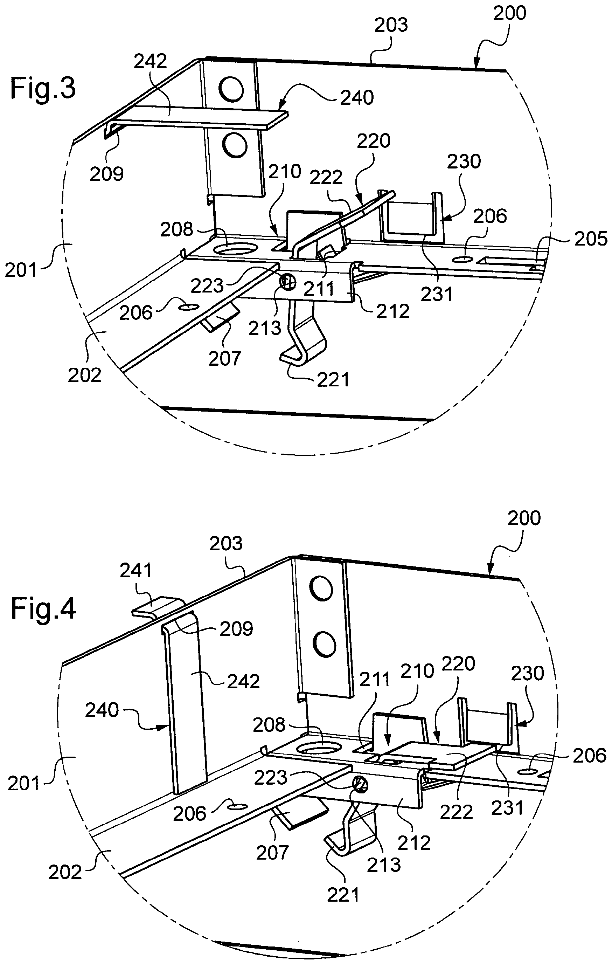

Telle que représentée sur les figures 3 et 4, la boîte de sol 1 comporte en outre des moyens de fixation du cadre d'installation 200 sur la base 100, à une hauteur réglable. Ces moyens de fixation comportent au moins une tige rainurée 131 qui s'étend à partir de la plaque de fond 110 en direction du cadre d'installation 200, et, en correspondance, au moins un organe de verrouillage 220 solidaire du cadre d'installation 200 et adapté à se verrouiller sur ladite tige rainurée 131.

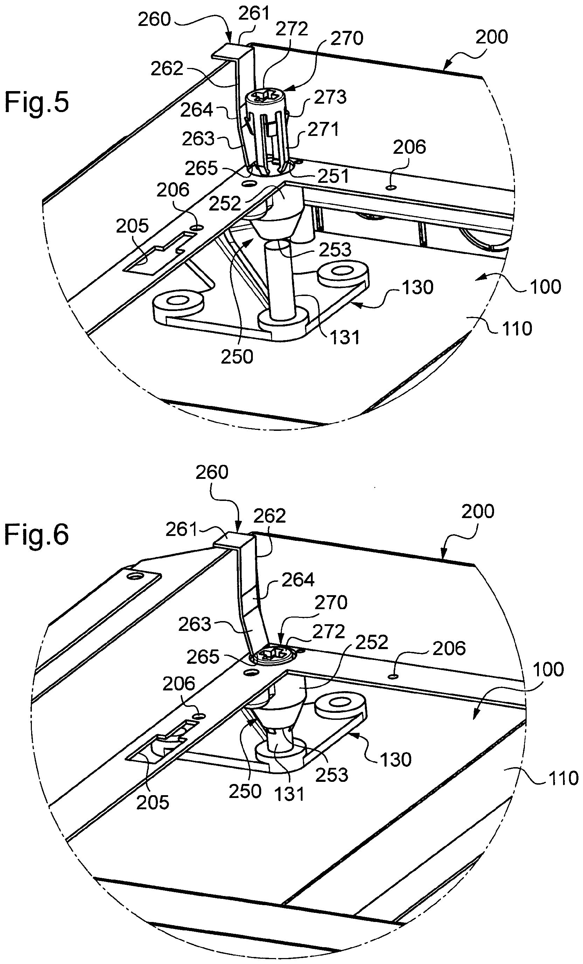

Sur les figures 5 et 6, on a représenté un second mode de réalisation de cet organe de verrouillage 270, qui est également adapté à se verrouiller sur ladite tige rainurée 131.

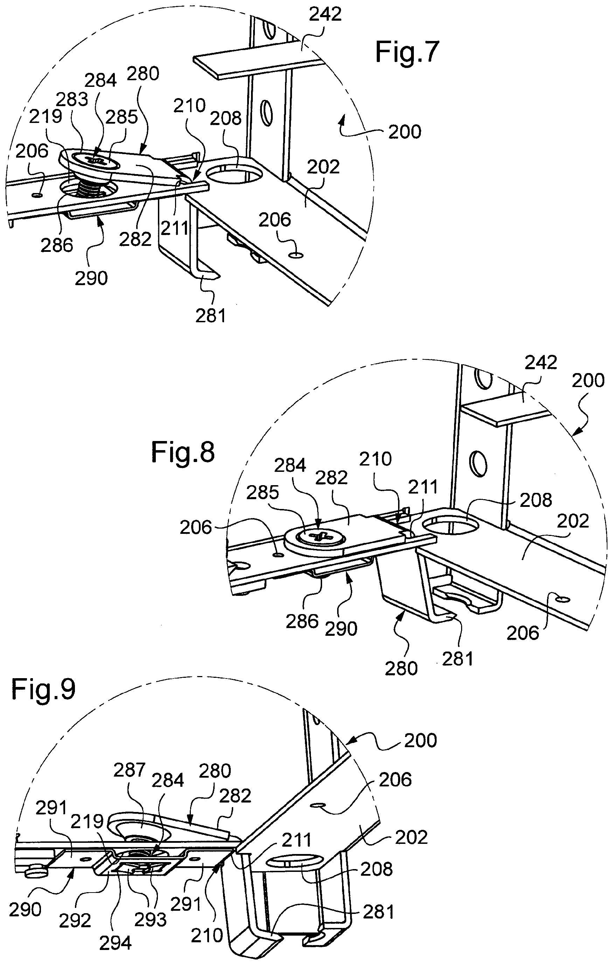

Sur les figures 7 à 9, on a par ailleurs représenté un troisième mode de réalisation de cet organe de verrouillage 280, adapté à se verrouiller sur ladite tige rainurée 131.

Selon les trois modes de réalisation de la boîte de sol 1 respectivement représentés sur les figures 3 et 4, sur les figures 5 et 6 et sur les figures 7 à 9, la base 100 comporte plus précisément quatre tiges rainurées 131 solidarisées à ses quatre montants 130, qui s'étendent verticalement à l'intérieur du logement d'accueil 160 de la boîte de sol 1, en direction du cadre d'installation 200.

Ici, les tiges rainurées 131 sont des vis peu onéreuses, dont les têtes hexagonales sont logées dans des cavités hexagonales prévues en correspondance sur les montants 130, en creux dans leurs faces tournées du côté de la plaque de fond 110. Elles pourraient en variante présenter d'autres formes. A titre d'exemple, elles pourraient être formées par des tiges crantées, c'est-à-dire par des axes équipés de séries de crans.

Le cadre d'installation 200 comporte quant à lui, à chacun des quatre coins de son rebord 202, une ouverture circulaire 208 ; 253 de dimensions égales, au jeu près, au diamètre des tiges rainurées 131. Ces ouvertures circulaires 208 ; 253 sont engagées sur les tiges rainurées 131 de telle manière que le cadre d'installation 200 peut coulisser dans le cadre fixe 150 le long de ces tiges rainurées 131.

Le cadre d'installation 200 est en outre équipé de quatre organes de verrouillage 220 ; 270 ; 280, situés à proximité de ses quatre ouvertures circulaires 208 ; 253, qui comportent chacun une partie d'accroche 221 ; 271 ; 281 à enclencher dans une rainure de la tige rainurée 131 correspondante pour verrouiller le cadre d'installation 200 à une hauteur déterminée sur la base 100.

Comme le montrent plus particulièrement les figures 4, 5 et 7, chaque organe de verrouillage 220 ; 270 ; 280 comporte en outre une partie d'appui 222 ; 272 ; 282 reliée à sa partie d'accroche 221 ; 271 ; 281 et destinée à recevoir une pression sensiblement dirigée vers la plaque de fond 110 pour enclencher cette partie d'accroche 221 ; 271 ; 281 dans la rainure de la tige rainurée 131 correspondante.

Cette pression est exercée parallèlement aux axes des tiges rainurées 131, ce qui permet non seulement de verrouiller les organes de verrouillage 220 ; 270 ; 280 sur la tige rainurée 131, mais aussi de pousser le cadre d'installation 200 vers la plaque de fond 110 pour qu'il se positionne correctement par rapport à la surface du sol.

Le cadre d'installation 200 comporte des moyens d'accueil 210 ; 250 de l'organe de verrouillage 220 ; 270 ; 280, agencés pour guider cet organe de verrouillage 220 ; 270 ; 280 entre une position désengagée (figures 3, 5 et 7) dans laquelle la partie d'accroche 221 ; 271 ; 281 de l'organe de verrouillage 220 ; 270 ; 280 est située à distance de la tige rainurée 131 correspondante, et une position engagée (figures 4, 6 et 8) dans laquelle cette partie d'accroche 221 ; 271 ; 281 est enclenchée dans la rainure de cette tige rainurée 131.

Selon une caractéristique particulièrement avantageuse de l'invention, le cadre d'installation 200 comporte en outre des moyens de blocage 230 ; 263 ; 290 de la partie d'accroche 221 ; 271 ; 281 de l'organe de verrouillage 220 ; 270 ; 280 en position engagée dans la rainure de la tige rainurée 131.

Dans les trois modes de réalisation représentés sur les figures, ces moyens de blocage comportent une languette élastiquement déformable 230 ; 263 ; 293, agencée pour s'effacer lorsqu'on exerce une pression sur la partie d'appui 222 ; 272 ; 282 de l'organe de verrouillage 220 ; 270 ; 280 et pour revenir élastiquement en appui sur cette partie d'appui 222 ; 272 ; 282 lorsque la partie d'accroche 221 ; 271 ; 281 de l'organe de verrouillage 220 ; 270 ; 280 s'enclenche dans la rainure de la tige rainurée 131 correspondante.

Dans ces trois modes de réalisation, ces moyens de blocage se présentent sous la forme d'un système de cliquet agencé pour ne pas bloquer le mouvement de l'organe de verrouillage 220 ; 270 ; 280 depuis sa position désengagée vers sa position engagée, et pour bloquer tout mouvement inverse de l'organe de verrouillage.

Le cadre d'installation 200 comporte aussi des moyens d'indexation 240 ; 260 de son bord avant à l'affleurement de la surface du sol. Ces moyens d'indexation permettent ainsi de régler la hauteur du cadre d'installation 200 par rapport à la base 100, de telle manière que la plaque de façade 300 puisse non seulement s'encliqueter sur le cadre d'installation 200 mais en outre s'appliquer parfaitement sur la surface du sol.

Dans le mode principal de réalisation de l'invention représenté sur les figures 1 à 4, l'organe de verrouillage 220 est monté pour pivoter sur le cadre d'installation 200 entre sa position engagée et sa position désengagée.

Chaque organe de verrouillage 220 se présente ici sous la forme d'une lame coudée engagée au travers d'une ouverture 211 pratiquée dans le rebord 202 du cadre d'installation 200.

Chaque organe de verrouillage 220 présente alors une extrémité avant située à l'avant de ce rebord 202, et une extrémité arrière située à l'arrière de ce rebord 202.

Son extrémité avant est plane et présente une forme de T. Elle est accessible à l'installateur pour qu'il puisse y appliquer son doigt afin d'exercer la pression nécessaire pour engager la partie d'accroche 221 de cet organe de verrouillage 220 dans la rainure de la tige rainurée 131 correspondante. Cette extrémité avant forme donc la partie d'appui 222 de l'organe de verrouillage 220.

Son extrémité arrière est recourbée vers la tige rainurée 131 de telle manière que son bord d'extrémité est adapté à s'engager dans une rainure de la tige rainurée 131. Cette extrémité arrière forme donc la partie d'accroche 221 de l'organe de verrouillage 220.

Son coude présente une forme de marche d'escalier et est situé dans l'ouverture 211 pratiquée dans le rebord 202 du cadre d'installation 200.

Ici, les moyens d'accueil 210 des organes de verrouillage 220 comportent des moyens de guidage 213 en rotation de chaque organe de verrouillage 220 par rapport au rebord 202 du cadre d'installation 200. Ces moyens de guidage comprennent, de part et d'autre de chaque ouverture 211, deux flancs métalliques 212 qui s'étendent à partir de la face arrière du rebord 202 du cadre d'installation 200 vers la plaque de fond 110, et qui présentent respectivement deux ouvertures 213 en regard afin de former deux paliers latéraux.

L'organe de verrouillage 220 comporte en correspondance, au niveau de son coude en escalier, deux ergots latéraux 223 qui sont engagés dans ces ouvertures 213 et qui forment ainsi des tourillons à engager dans les paliers latéraux.

L'organe de verrouillage peut ainsi basculer entre sa position désengagée (figure 3) dans laquelle sa partie d'accroche 221 est située à distance de la tige rainurée 131 et dans laquelle sa partie d'appui 222 est inclinée par rapport au rebord 202 du cadre d'installation 200, et sa position engagée dans laquelle sa partie d'accroche 221 est engagée dans la tige rainurée 131 et dans laquelle sa partie d'appui 222 vient en butée contre le rebord 202 du cadre d'installation 200.

Bien sûr, en variante, on pourrait prévoir que les tourillons soient portés par le cadre d'installation 200 et que les ouvertures soient pratiquées dans l'organe de verrouillage 220.

Pour s'assurer que les tiges rainurées 131 ne fléchissent par lors du verrouillage des organes de verrouillage 220, le cadre d'installation 200 comporte des languettes 207 qui s'étendent à partir des quatre coins de son bord arrière 204, en direction des parties d'accroche 221 des organes de verrouillage 220 correspondants. Ainsi, lors du montage du cadre d'installation 200 sur la base 100 de la boîte de sol 1, chaque tige rainurée 131 s'interpose entre une languette 207 et un organe de verrouillage 220.

Lorsque les organes de verrouillage 220 sont verrouillés sur les tiges rainurées 131, leurs parties d'accroche 221 ont tendance à faire fléchir les tiges rainurées 131 en prenant appui au fond d'une rainure de celles-ci. Les tiges rainurées 131 qui fléchissent légèrement viennent alors en butée contre les languettes 207 du cadre d'installation 200 qui limitent ainsi ce fléchissement en formant des contre-butées.

De cette manière, les languettes 207 assurent aux organes de verrouillage 220 de rester parfaitement engagés dans les rainures des tiges rainurées 131, quand bien même un effort serait exercé verticalement sur le cadre d'installation 200.

Dans ce mode de réalisation, comme le montrent les figures 3 et 4, les languettes élastiquement déformables 230 qui permettent de bloquer les organes de verrouillage 220 en position engagée sont directement découpées dans la paroi latérale 201 du cadre d'installation 200. Chaque languette élastiquement déformable 230 présente ainsi un bord d'extrémité qui est rattaché à cette paroi latérale 201 et qui forme une charnière de pivotement, et un bord d'extrémité libre 231 opposé qui, au repos, s'étend en saillie de la paroi latérale 201, à l'intérieur du cadre d'installation 200.

Ainsi, lorsque l'installateur appuie sur la partie d'appui 222 de l'organe de verrouillage, ce dernier glisse le long de la languette élastiquement déformable 230 de telle sorte que celle-ci s'efface en se positionnant dans le prolongement de la paroi latérale 201 du cadre d'installation 200.

Puis, lorsque cette partie d'appui 222 passe au-delà du bord d'extrémité libre 231 de la languette élastiquement déformable 230, celle-ci revient en position de repos de telle sorte que son bord d'extrémité libre 231 appuie sur la face avant de la partie d'appui 222 de l'organe de verrouillage 220 pour le bloquer en position engagée.

En variante, les moyens de blocage pourraient bien sûr être constitués autrement. A titre d'exemple, on pourrait prévoir qu'ils soient formés par un simple bombement prévu en saillie de la face intérieure de la paroi latérale 201 du cadre d'installation 200.

Dans ce mode de réalisation de l'invention, les moyens d'indexation du cadre d'installation 200 à l'affleurement de la surface du sol comportent quatre languettes d'indexation 240 engagées dans quatre ouvertures 209 correspondantes situées sur deux côtés opposés de la paroi latérale 201 du cadre d'installation 200, à proximité de son bord avant 203.

Chaque languette d'indexation 240 est réalisée d'une seule pièce à partir d'un feuillard métallique. Elle présente une forme coudée, avec une partie de support 242 plane, de longueur sensiblement égale à la hauteur de la paroi latérale 201 du cadre d'installation 200, et une partie d'extrémité 241 également plane mais de moindre longueur, conçue pour faire saillie à l'extérieur du cadre d'installation 200 afin de s'accrocher à la surface du sol. Ces deux parties 241, 242 se raccordent par un coude en forme de marche d'escalier, situé dans l'ouverture 209 correspondante.

Grâce à cette forme en marche d'escalier, chaque languette d'indexation 240 est adaptée à pivoter sur le cadre d'installation 200, entre une position de livraison (figure 3) dans laquelle sa partie d'extrémité 241 s'applique contre la face extérieure de la paroi latérale 201 du cadre d'installation 200, et une position déployée (figure 4) dans laquelle sa partie d'extrémité 241 fait saillie à l'extérieur du cadre d'installation 200, au niveau de son bord avant 203, pour s'accrocher à la surface du sol.

Avant l'installation de la boîte de sol 1, le cadre d'installation 200 étant complètement engagé à l'intérieur du cadre fixe 150 de la base 100, les languettes d'indexation 240 sont maintenues en position de livraison par leur partie d'extrémité 241 qui est prise en sandwich entre la face extérieure de la paroi latérale 201 du cadre d'installation 200 et la face intérieure de la paroi latérale 151 du cadre fixe 150 de la base 100.

Dans cette position, la partie de support 242 de chaque languette d'indexation 240 s'étend dans le plan du bord avant 203 du cadre d'installation 200, si bien que les languettes d'indexation 240 ne génèrent aucun encombrement dans la boîte de sol 1.

Lors de la mise en place de la boîte de sol 1, le cadre d'installation 200 est soulevé pour être extrait, au moins en partie, hors de la base 100, ce qui libère les parties d'extrémité 241 des languettes d'indexation 240 qui, par gravité, basculent alors en position déployée. Le cadre d'installation 200 peut alors être relâché de manière que les parties d'extrémité 241 des languettes d'indexation 240 viennent en appui contre la surface du sol, afin de maintenir le cadre d'installation 200 à la hauteur désirée.

L'installateur appuie alors sur les parties d'appui 222 des organes de verrouillage 220 ce qui provoque le basculement de ces organes de verrouillage 220 en position engagée et, partant, le fléchissement des tiges rainurées 131 qui viennent en contre-butée contre les languettes 207 du cadre d'installation 200. Cet appui permet en outre de s'assurer que les parties d'extrémité 241 des languettes d'indexation 240 s'appliquent parfaitement contre la surface du sol.

Enfin, l'installateur rapporte les supports d'appareillage et les appareillages dans le logement d'accueil 160, puis la plaque de façade 300 sur le cadre d'installation 200 pour placer la boîte de sol 1 en conditions d'utilisation.

Dans le second mode de réalisation de la boîte de sol représenté sur les figures 5 et 6, chaque organe de verrouillage 270 est adapté à être monté sur le cadre d'installation 200 par un mouvement de translation, depuis sa position désengagée jusqu'à sa position engagée.

Ici, chaque organe de verrouillage 270 est réalisé d'une seule pièce sous la forme d'un pion.

Ce pion présente une forme globalement cylindrique, avec une face avant circulaire accessible à l'installateur pour qu'il puisse y appliquer son doigt afin d'exercer la pression nécessaire pour engager la partie d'accroche 271 de cet organe de verrouillage 270 dans la rainure de la tige rainurée 131 correspondante. Cette face avant du pion forme donc la partie d'appui 272 de l'organe de verrouillage 270. Elle présente ici en outre une empreinte de réception de la pointe cruciforme d'un tournevis, permettant de faciliter, si nécessaire, le désengagement de la partie d'accroche 271 de cet organe de verrouillage 270 hors de la rainure de la tige rainurée 131 correspondante.

Ce pion comporte par ailleurs, du côté de sa face arrière, quatre pattes 271 qui s'étendent en longueur vers la plaque de fond 110 de la base 100. Les extrémités libres de ces pattes 271 sont inclinées en direction de la tige rainurée 131 et portent des dents d'encliquetage du côté de leurs faces internes, adaptées à s'engager dans la rainure de la tige rainurée 131. Les quatre pattes 271 forment donc ensemble la partie d'accroche 271 de l'organe de verrouillage 270.

Ici, les moyens d'accueil 250 des organes de verrouillage 270 dans le cadre d'installation 200 comportent des moyens de guidage 252 en translation de chaque organe de verrouillage 270 par rapport au rebord 202 du cadre d'installation 200. Ces moyens de guidage comprennent, à chacun des quatre coins du rebord 202 du cadre d'installation 200, un puits de réception 252 qui s'étend suivant l'axe de la tige rainurée 131 en direction de la plaque de fond 110, et qui est ouvert à ses deux extrémités pour, d'un côté, être engagé sur ladite tige rainurée 131, et, de l'autre, recevoir ledit organe de verrouillage 270.

Chaque puits de réception 252 présente plus particulièrement une extrémité avant tubulaire qui débouche vers l'avant du cadre d'installation 200 par une ouverture 251 pratiquée dans le rebord 202 de ce cadre d'installation 200, et une extrémité arrière qui converge vers la plaque de fond 110 et qui présente une ouverture d'extrémité 253 de diamètre égal, au jeu près au diamètre des tiges rainurées 131.

Pour fixer le cadre d'installation 200 à la base 100, les ouvertures d'extrémité 253 des puits de réception 252 sont engagées sur les tiges rainurées 151 de la base 100. Les organes de verrouillage 270 sont ensuite poussés depuis leurs positions désengagées à l'extérieur des puits de réception 252 (figure 5), vers leurs positions engagées (figure 6) dans lesquelles les dents d'encliquetage de leurs pattes 271 s'engagent dans les rainures des tiges rainurées 131 et dans lesquelles leurs parties d'appui 272 viennent à l'affleurement du rebord 202 du cadre d'installation 200.

En position engagée, les faces externes des extrémités inclinées des pattes 271 de chaque organe de verrouillage 270 s'appliquent contre la face intérieure convergente de l'extrémité arrière du puits de réception 252. De cette manière, les puits de réception 252 maintiennent les parties d'accroche 271 des organes de verrouillage 270 en position engagée dans les rainures des tiges rainurées 131, quand bien même un effort serait exercé verticalement sur le cadre d'installation 200.

Dans ce mode, il est en outre prévu des moyens de fixation 273 de chaque organe de verrouillage 270 dans le cadre d'installation 200. Ces moyens de fixation sont formés par quatre nervures d'encliquetage 273 intercalées entre les quatre pattes 271 de l'organe de verrouillage 270, qui sont adaptées à s'accrocher à l'arrière du rebord 202 du cadre d'installation 200, au bord de l'ouverture 251.

Ici, les moyens d'indexation du cadre d'installation 200 à l'affleurement de la surface du sol comportent quatre languettes d'indexation 260 situées sur deux côtés opposés du cadre d'installation 200, à proximité de son bord avant 203.

Comme le montre plus particulièrement la figure 5, chaque languette d'indexation 260 est réalisée d'une seule pièce à partir d'un feuillard métallique. Elle présente une forme coudée, avec une partie de support 262 sensiblement plane, de longueur sensiblement égale à la hauteur de la paroi latérale 201 du cadre d'installation 200, et une partie d'extrémité 261 également plane mais de longueur moindre, repliée à angle droit sur le bord avant 203 du cadre d'installation pour faire saillie à l'extérieur du cadre d'installation 200 de manière à pouvoir s'accrocher à la surface du sol.

La partie de support 262 présente une portion centrale 264 qui est fixée, par exemple par soudage, à la paroi latérale 201 du cadre d'installation 200.

Dans ce mode, les languettes élastiquement déformables 263 qui permettent de bloquer les accessoires de blocage 270 en position engagée sont formées par les extrémités arrière des parties de support 262 de ces languettes d'indexation 260.

Les extrémités arrière des parties de support 262 des languettes d'indexation 260 sont à cet effet inclinées vers l'intérieur du cadre d'installation 200 de manière que leurs bords libres d'extrémité 265 s'étendent en saillie de la face intérieure de la paroi latérale 201 du cadre d'installation 200.

Ainsi, lorsqu'un installateur engage un organe de verrouillage 270 dans le puits de réception 252 correspondant du cadre d'installation 200 et appuie sur la partie d'appui 272 de cet organe de verrouillage, ce dernier glisse le long de la partie de support 262 de la languette d'indexation 260 correspondante de telle sorte que celle-ci s'efface en se positionnant contre la paroi latérale 201 du cadre d'installation 200.

Puis, lorsque cette partie d'appui 272 passe au-delà du bord libre d'extrémité 265 de cette partie de support 262, celle-ci revient en position de repos et son bord libre d'extrémité 265 se positionne en appui sur la face avant de la partie d'appui 272 de l'organe de verrouillage 270 pour le bloquer en position engagée.

Dans le troisième mode de réalisation de l'invention représenté sur les figures 7 à 9, chaque organe de verrouillage 280 présente une forme homologue de celle de l'organe de verrouillage 220 représenté sur les figures 3 et 4. Cet organe de verrouillage 280 est également monté sur le cadre d'installation 200 pour pivoter entre sa position engagée et sa position désengagée.

Chaque organe de verrouillage 280 se présente donc ici sous la forme d'une lame coudée engagée au travers d'une ouverture 211 pratiquée dans le rebord 202 du cadre d'installation 200. Chaque organe de verrouillage 280 présente alors une extrémité avant située à l'avant de ce rebord 202, et une extrémité arrière située à l'arrière de ce rebord 202.

Son extrémité avant est plane et accessible à l'installateur pour qu'il puisse y appliquer son doigt afin d'exercer la pression nécessaire pour engager la partie d'accroche 281 de cet organe de verrouillage 280 dans la rainure de la tige rainurée (non visible sur les figures 7 à 9) correspondante. Elle forme ainsi la partie d'appui 282 de l'organe de verrouillage 280.

Son extrémité arrière est recourbée vers la tige rainurée de telle manière que son bord d'extrémité forme la partie d'accroche 281 de l'organe de verrouillage 280.

L'organe de verrouillage peut ainsi basculer entre sa position désengagée (figure 7) dans laquelle sa partie d'accroche 281 est située à distance de la tige rainurée et dans laquelle sa partie d'appui 282 est inclinée par rapport au rebord 202 du cadre d'installation 200, et sa position engagée dans laquelle sa partie d'accroche 281 est engagée dans la tige rainurée et dans laquelle sa partie d'appui 282 vient en butée contre le rebord 202 du cadre d'installation 200.

Dans ce mode de réalisation, comme le montre plus particulièrement la figure 7, l'organe de verrouillage 280 comporte une vis de blocage 284 dont la tête 285 est engagée dans une ouverture 283 pratiquée dans la partie d'appui 282 de l'organe de verrouillage 280 et dont le corps fileté 286 est agencée pour passer au travers d'une ouverture 219 pratiquée dans le rebord 202 du cadre d'installation 200 pour coopérer avec les moyens de blocage de l'organe de verrouillage 280.

Telle que représentée sur la figure 9, l'ouverture 283 pratiquée dans la partie d'appui 282 de l'organe de verrouillage 280 est ici bordée en face arrière par une couronne tronconique 287. Cette couronne tronconique 287 forme un appui pour la tête 285 de la vis de blocage 284 afin que celle-ci ne fasse pas saillie au-dessus de la face avant de la partie d'appui 282 de l'organe de verrouillage 280.

Comme le montre la figure 9, les moyens de blocage de l'organe de verrouillage comportent quant à eux une lamelle métallique 290 fixée à l'arrière du rebord 202 du cadre d'installation 200. Cette lamelle métallique 290 se présente sous la forme d'un feuillard métallique de forme initiale rectangulaire et de largeur égale à la largeur du rebord 202 du cadre d'installation 200.

Les deux extrémités 291 de la lamelle métallique 290 sont repliées par rapport à la partie centrale 292 de cette lamelle métallique 290, de manière à s'étendre dans un même plan situé parallèlement et en avant du plan de la partie centrale 292 de la lamelle métallique 290.

Les deux extrémités 291 de la lamelle métallique 290 peuvent ainsi être fixés à la face arrière du rebord 202 du cadre d'installation 200, de telle manière que la partie centrale 292 de la lamelle métallique 290 s'étende à distance de ce rebord 202, en vis-à-vis de l'ouverture 219 pratiquée dans ce rebord 202.

Ici, les deux extrémités 291 de la lamelle métallique 290 sont soudées contre la face arrière du rebord 202 du cadre d'installation 200. En variante, on pourrait prévoir qu'elles soient fixées autrement à ce rebord, par exemple par vissage ou par collage.

La partie centrale 292 de la lamelle métallique 290 présente quant à elle une ouverture centrale 294 rectangulaire qui est située dans l'axe de l'ouverture 219 et qui est délimitée par deux bords latéraux et par deux bords d'extrémité. Cette ouverture centrale 294 définit ainsi une section de passage pour le corps fileté 286 de la vis de blocage 284.

Deux languettes élastiquement déformable 293 s'étendent en vis-à-vis à partir des deux bords d'extrémité de l'ouverture centrale 294, en direction l'une de l'autre. Ces deux languettes élastiquement déformable 293 présentent chacune une forme rectangulaire, avec un bord qui se rattache à la partie centrale 292 de la lamelle métallique 290 par une charnière de pivotement, et un bord libre opposé dans lequel est découpée une encoche semi-circulaire.

Ces deux languettes élastiquement déformable 293 sont repliées vers l'arrière de la lamelle métallique 290 d'un angle compris entre 1 et 45 degrés, de telle sorte qu'au repos, leurs bords libres s'étendent en saillie de la face arrière de la partie centrale 292 de la lamelle métallique 290.

Ainsi, lorsque l'installateur appuie sur la partie d'appui 222 de l'organe de verrouillage 280 pour engager sa partie d'accroche 281 dans la tige rainurée correspondante, le corps fileté 286 de la vis de blocage 284 s'engage au travers de l'ouverture centrale 294 de la lamelle métallique 290, ce qui fait fléchir élastiquement les deux languettes élastiquement déformable 293. Ces languettes élastiquement déformable 293 ne forment ainsi pas obstacle au basculement de l'organe de verrouillage 280 vers sa position engagée.

Lorsque l'organe de verrouillage 280 est placé en position engagée sur la tige rainurée, les encoches semi-circulaires prévues aux extrémités libres des languettes élastiquement déformable 293 s'engagent dans le filetage du corps fileté 286 de la vis de blocage 284, ce qui bloque l'organe de verrouillage 280 en position fixe. L'organe de verrouillage 280 empêche alors tout mouvement axial de la tige rainurée par rapport à la lamelle métallique 290 et de ce fait tout mouvement du cadre d'installation 200 par rapport à la base 100.

Pour débloquer l'organe de verrouillage 280, la tête 285 de la vis de blocage 284 présente une empreinte, ici de forme cruciforme, qui permet à l'installateur de dévisser la vis de blocage 284. Lors de cette opération de dévissage, le filetage du corps fileté 286 de la vis de blocage 284 coulisse alors entre les encoches semi-circulaire des deux languettes élastiquement déformable 293, ce qui permet de ramener l'organe de verrouillage 280 vers sa position désengagée.

## Revendications

1. Boîte de sol (1) comportant :
- une base (100) comprenant une plaque (110) à ancrer au sol,
- un cadre d'installation (200) à rapporter sur ladite base (100), et
- des moyens de fixation du cadre d'installation (200) sur ladite base (100), à une hauteur réglable, qui comportent :
- au moins une tige rainurée (131) qui s'étend à partir de ladite base (100) en direction du cadre d'installation (200), et
- un organe de verrouillage (220 ; 270 ; 280) du cadre d'installation (200) sur ladite tige rainurée (131), qui présente une partie d'accroche (221 ; 271 ; 281) à enclencher dans une rainure de cette tige rainurée (131) et une partie d'appui (222 ; 272 ; 282) reliée à ladite partie d'accroche (221 ; 271 ; 281) et destinée à recevoir une pression sensiblement dirigée vers ladite plaque (110) pour enclencher ladite partie d'accroche (221 ; 271 ; 281) dans ladite rainure,
dans lequel le cadre d'installation (200) comporte des moyens de blocage (230 ; 263 ; 290) adaptés à bloquer la partie d'accroche (221 ; 271 ; 281) de l'organe de verrouillage (220 ; 270 ; 280) en position enclenchée dans la rainure de la tige rainurée (131),
**caractérisée en ce que** ladite partie d'accroche (221 ; 271 ; 281) est adaptée à verrouiller le cadre d'installation (200) à une hauteur déterminée sur la base (100).

2. Boîte de sol (1) selon la revendication précédente, dans laquelle ledit cadre d'installation (200) comporte des moyens d'accueil (210 ; 250) de l'organe de verrouillage (220 ; 270 ; 280), agencés pour guider ledit organe de verrouillage (220 ; 270 ; 280) entre une position désengagée dans laquelle ladite partie d'accroche (221 ; 271 ; 281) est située à distance de ladite tige rainurée (131), et une position engagée dans laquelle ladite partie d'accroche (221 ; 271 ; 281) est enclenchée dans la rainure de ladite tige rainurée (131).

3. Boîte de sol (1) selon la revendication précédente, dans laquelle les moyens de blocage comportent une languette élastiquement déformable (230 ; 263 ; 293), agencée pour s'effacer lorsque ladite pression est exercée sur ladite partie d'appui (222 ; 272 ; 282) et pour revenir élastiquement en appui sur l'organe de verrouillage (220 ; 270 ; 280) lorsque ladite partie d'accroche (221 ; 271 ; 281) est enclenchée dans la rainure de ladite tige rainurée (131).

4. Boîte de sol (1) selon l'une des revendications 2 et 3, dans laquelle lesdits moyens d'accueil (210) comportent des moyens de guidage (213) en rotation dudit organe de verrouillage (220) par rapport audit cadre d'installation (200).

5. Boîte de sol (1) selon la revendication précédente, dans laquelle lesdits moyens de guidage comportent deux ouvertures (213) en regard qui forment des paliers adaptés à recevoir deux ergots (223) dudit organe de verrouillage (220).

6. Boîte de sol (1) selon l'une des deux revendications précédentes, dans laquelle l'organe de verrouillage (220 ; 280) est réalisé d'une seule pièce sous la forme d'une lame présentant une première extrémité repliée pour former ladite partie d'accroche (221 ; 281) et une seconde extrémité accessible à l'installateur pour former ladite partie d'appui (222 ; 282).

7. Boîte de sol (1) selon l'une des revendications 2 et 3, dans laquelle lesdits moyens d'accueil (250) comportent des moyens de guidage en translation dudit organe de verrouillage (270) par rapport audit cadre d'installation (200).

8. Boîte de sol (1) selon la revendication précédente, dans laquelle lesdits moyens de guidage comportent un puits de réception (252) qui s'étend suivant l'axe de la tige rainurée (131) en direction de ladite plaque (110), et qui est ouvert à ses deux extrémités pour, d'un côté, être engagé sur ladite tige rainurée (131), et, de l'autre, recevoir ledit organe de verrouillage (270).

9. Boîte de sol (1) selon l'une des deux revendications précédentes, dans laquelle l'organe de verrouillage (270) est réalisé d'une seule pièce sous la forme d'un pion qui présente une première extrémité à engager sur ladite tige rainurée (131), munie d'au moins une dent pour former ladite partie d'accroche (271), et une seconde extrémité accessible à l'installateur pour former ladite partie d'appui (272).

10. Boîte de sol (1) selon l'une des revendications précédentes, dans laquelle il est prévu une tige rainurée (131) à chacun des quatre coins de ladite plaque (110) et, en correspondance, un organe de verrouillage (220 ; 270 ; 280) à chacun des quatre coins du cadre d'installation (200).

11. Boîte de sol (1) selon l'une des revendications précédentes à rapporter dans une excavation du sol, dans laquelle le cadre d'installation (200) comporte un bord avant (203) et des moyens d'indexation (240 ; 260) de son bord avant (203) à l'affleurement de la surface du sol.

12. Boîte de sol (1) selon la revendication précédente, dans laquelle lesdits moyens d'indexation comportent au moins une languette (240 ; 260) qui est solidarisée au cadre d'installation (200) et qui présente une extrémité avant (241 ; 271) repliée pour faire saillie à l'extérieur du cadre d'installation (200).

13. Boîte de sol (1) selon la revendication 12, dans laquelle ladite languette (240) est montée à pivotement sur ledit cadre d'installation (200), entre une position de livraison dans laquelle son extrémité avant (241) s'applique contre le cadre d'installation (200) et une position déployée dans laquelle son extrémité avant fait saillie à l'extérieur du cadre.

14. Boîte de sol (1) selon les revendications 3 et 12, dans laquelle ladite languette (260) comporte également lesdits moyens de blocage (263).

## Patentansprüche

1. Bodendose (1) mit
- einem Sockel (100), der eine im Boden zu verankernde Platte (110) aufweist,
- einem am Sockel (100) anzubringenden Installationsrahmen (200) und
- Mitteln zum Befestigen des Installationsrahmens (200) auf dem Sockel (100) in einer einstellbaren Höhe, die
- wenigstens eine gerillte Stange (131), die sich vom Sockel (100) aus in Richtung des Installationsrahmens (200) erstreckt, und
- ein Organ (220; 270; 280) zum Verriegeln des Installationsrahmens (200) an der gerillten Stange (131), das ein Eingriffsteil (221; 271; 281) zum Eingreifen in einer Rille der gerillten Stange (131) und ein mit dem Eingriffsteil (221; 271; 281) verbundenes Andruckteil (222; 272; 282) aufweist, das dazu bestimmt ist, einen im Wesentlichen zur Platte (110) hin gerichteten Druck aufzunehmen, um das Eingriffsteil (221; 271; 281) in der Rille der gerillten Stange (131) in Eingriff zu bringen,
aufweisen,
wobei der Installationsrahmen (200) Blockiermittel (230; 263; 290) aufweist, die dazu ausgelegt sind, das Eingriffsteil (221; 271; 281) des Verriegelungsorgans (220; 270; 280) in in der Rille der gerillten Stange (131) eingehakter Position zu blockieren,
**dadurch gekennzeichnet, daß** das Eingriffsteil (221; 271; 281) dazu ausgelegt ist, den Installationsrahmen (200) in einer bestimmten Höhe auf dem Sockel (100) zu verriegeln.

2. Bodendose (1) gemäß dem vorangehenden Anspruch, bei der der Installationsrahmen (200) Mittel (210; 250) zum Aufnehmen des Verriegelungsorgans (220; 270; 280) aufweist, die dazu ausgelegt sind, das Verriegelungsorgan (220; 270; 280) zwischen einer Außer-Eingriff-Stellung, in der sich das Eingriffsteil (221; 271; 281) in einer Entfernung von der gerillten Stange (131) befindet, und einer Eingriffsstellung, in der das Eingriffsteil (221; 271; 281) in der Rille der gerillten Stange (131) in Eingriff ist, zu führen.

3. Bodendose (1) gemäß dem vorangehenden Anspruch, bei der die Blockiermittel eine elastisch verformbare Zunge (230; 263; 293) aufweisen, die dazu ausgelegt ist, sich wegzubewegen, wenn der besagte Druck auf das Andruckteil (222; 272; 282) ausgeübt wird, und elastisch wieder in Anlage an das Verriegelungsorgan (220; 270; 280) zu kommen, wenn das Eingriffsteil (221; 271; 281) in der Rille der gerillten Stange in Eingriff ist.

4. Bodendose (1) gemäß einem der Ansprüche 2 und 3, bei der die Aufnahmemittel (210) Mittel 213) zum rotationsmäßigen Führen des Verriegelungsorgans (220) gegenüber dem Installationsrahmen (200) aufweisen.

5. Bodendose (1) gemäß dem vorangehenden Anspruch, bei der die Führungsmittel zwei gegenüber liegende Öffnungen (213) aufweisen, die Lager bilden, die dazu ausgelegt sind, zwei Nasen (223) des Verriegelungsorgans (220) aufzunehmen.

6. Bodendose (1) gemäß einem der beiden vorangehenden Ansprüche, bei der das Verriegelungsorgan (220; 280) in einem einzigen Stück in Form einer Lamelle ausgebildet ist, die ein erstes umgebogenes Ende zum Bilden des Eingriffsteils (221; 281) und ein zweites, für den Installateur zugängliches Ende zum Bilden des Andruckteils (222; 282) aufweist.

7. Bodendose (1) gemäß einem der Ansprüche 2 und 3, bei der die Aufnahmemittel (250) Mittel 213) zum translatorischen Führen des Verriegelungsorgans (270) gegenüber dem Installationsrahmen (200) aufweisen.

8. Bodendose (1) gemäß dem vorangehenden Anspruch, bei der die Führungsmittel einen Aufnahmeschacht (252) aufweisen, der sich entlang der Achse der gerillten Stange (131) in Richtung auf die Platte (110) erstreckt und der an dessen beiden Enden offen ist, um einerseits auf die gerillte Stange (131) aufgestülpt zu werden und um andererseits das Verriegelungsorgan (270) aufzunehmen.

9. Bodendose (1) gemäß einem der beiden vorangehenden Ansprüche, bei der das Verriegelungsorgan (270) in einem einzigen Stück in Form eines Zapfens ausgebildet ist, der ein erstes, mit der gerillten Stange (131) in Eingriff zu bringendes und wenigstens einen Zahn zum Bilden des Eingriffsteils (271) aufweisendes Ende und ein zweites, für den Installateur zugängliches Ende zum Bilden des Andruckteils (272) aufweist.

10. Bodendose (1) gemäß einem der vorangehenden Ansprüche, bei der eine gerillte Stange (131) an jeder der vier Ecken der Platte (110) und folglich ein Verriegelungsorgan (220; 270; 280) an jeder der vier Ecken des Installationsrahmens (200) vorgesehen sind.

11. Bodendose (1) gemäß einem der vorangehenden Ansprüche, die in eine Bodenaushebung einzubringen ist, bei der der Installationsrahmen (200) einen vorderen Rand (203) und Indexierungsmittel (240; 260) von dessen vorderem Rand (203) für die Bündigkeit mit der Bodenoberfläche aufweist.

12. Bodendose (1) gemäß dem vorangehenden Anspruch, bei der die Indexierungsmittel wenigstens eine Zunge (240; 260) aufweisen, die mit dem Installationsrahmen (200) fest verbunden ist und die ein vorderes Ende (241; 271) aufweist, das umgebogen ist, um aus dem Installationsrahmen (200) nach draußen zu ragen.

13. Bodendose (1) gemäß Anspruch 12, bei der die Zunge (240) auf dem Installationsrahmen (200) zwischen einer Lieferposition, in der deren vorderes Ende (241) am Installationsrahmen (200) anliegt, und einer ausgeschwenkten Position, in der deren vorderes Ende aus dem Rahmen nach draußen ragt, schwenkbar angebracht ist.

14. Bodendose (1) gemäß den Ansprüchen 3 und 12, bei der die Zunge (260) außerdem die Blockiermittel (263) aufweist.

## Claims

1. A floor box (1) comprising:
· a base (100) comprising a plate (110) for securing to the floor;
· an installation frame (200) for fitting on said base (100); and
· fastener means for fastening the installation frame (200) on said base (100) at an adjustable height, and comprising:
· at least one grooved rod (131) extending from said base (100) towards the installation frame (200); and
· a locking member (220, 270, 280) for locking the installation frame (200) on said grooved rod (131), which locking member presents a catch portion (221, 271, 281) for engaging in a groove of the grooved rod (131), and a bearing portion (222, 272, 282) connected to said catch portion (221, 271, 281) and serving to receive pressure directed substantially towards said plate (110) in order to engage said catch portion (221, 271, 281) in said groove;
wherein the installation frame (200) includes blocking means (230, 263, 290) for blocking the catch portion (221, 271, 281) of the locking member (220, 270, 280) in the engaged position in said groove of the grooved rod (131)
the floor box being **characterized in that** said catch portion (221, 271, 281) is arranged to lock the installation frame (200) one the base (100) at a predetermined height.

2. A floor box (1) according to the preceding claim, wherein said installation frame (200) includes reception means (210, 250) for receiving the locking member (220, 270, 280) and arranged to guide said locking member (220, 270, 280) between a disengaged position in which said catch portion (221, 271, 281) is situated at a distance from said grooved rod (131), and an engaged position in which said catch portion (221, 271, 281) is engaged in the groove of said grooved rod (131).

3. A floor box (1) according to the preceding claim, wherein the blocking means comprise an elastically deformable tongue (230, 263, 293) arranged to retract when said pressure is exerted on said bearing portion (222, 272, 282) and to return elastically to bear against the locking member (220, 270, 280) when said catch portion (221, 271, 281) is engaged in the groove of said grooved rod (131).

4. A floor box (1) according to claim 2 or claim 3, wherein said reception means (210) include guide means (213) for guiding said locking member (220) in rotation relative to said installation frame (200).

5. A floor box (1) according to the preceding claim, wherein said guide means include two facing openings (213) that form bearings adapted to receive two studs (223) of said locking member (220).

6. A floor box (1) according to either one of the two preceding claims, wherein the locking member (220, 280) is made as a single piece in the form of a strip presenting a first end that is bent to form said catch portion (221, 281) and a second end that is accessible to the installer in order to form said bearing portion (222, 282).

7. A floor box (1) according to claim 2 or claim 3, wherein said reception means (250) include guide means for guiding said locking member (270) in translation relative to said installation frame (200).

8. A floor box (1) according to the preceding claim, wherein said guide means include a reception well (252) that extends along the axis of the grooved rod (131) towards said plate (110), and that is open at both ends to be engaged at one end on said grooved rod (131) and to receive at the other end said locking member (270).

9. A floor box (1) according to either one of the two preceding claims, wherein the locking member (270) is made as a single piece in the form of a peg presenting a first end for engaging on said grooved rod (131) and provided with at least one tooth for forming said catch portion (271), and a second end that is accessible to the installer in order to form said bearing portion (272).

10. A floor box (1) according to any preceding claim, wherein a grooved rod (131) is provided at each of the four corners of said plate (110) and a locking member (220, 270, 280) is provided in correspondence therewith in each of the four corners of the installation frame (200).

11. A floor box (1) according to any preceding claim, for fitting in a recess in the floor, wherein the installation frame (200) includes a top edge (203) and indexing means (240, 260) for indexing its top edge (203) flush with the surface of the floor.

12. A floor box (1) according to the preceding claim, wherein said indexing means include at least one tongue (240, 260) that is secured to the installation frame (200) and that presents a top end (241, 271) that is folded to project out from the installation frame (200).

13. A floor box (1) according to claim 12, wherein said tongue (240) is mounted to pivot on said installation frame (200) between a delivery position in which its top end (241) presses against the installation frame (200), and a deployed position in which its top end projects outwards from the frame.

14. A floor box (1) according to claims 3 and 12, wherein said tongue (260) also includes said blocking means (263).
